# EUROPEAN PATENT APPLICATION

(11) **EP 4 755 689 A1**
(43) Date of publication of application: **10.06.2026**
(21) Application number: 25220851.7
(22) Date of filing: 04.12.2025
(51) Int. Cl.: B60K 35/235, B60K 35/29, B60K 35/22, B60K 35/10

(54) **IN-VEHICLE SYSTEM, VEHICLE, INFORMATION PROCESSING APPARATUS, INFORMATION PROCESSING METHOD, AND STORAGE MEDIUM**

(30) Priority: 06.12.2024 JP 2024213964
(71) Applicant: Toyota Jidosha Kabushiki Kaisha, Toyota-shi, Aichi-ken 471-8571 (JP)
(72) Inventor: TANAKA, Seiichi, Toyota-shi, 471-8571 (JP); FUJIWARA, Tatsuro, Toyota-shi, 471-8571 (JP); TSUJINO, Miki, Toyota-shi, 471-8571 (JP); ONISHI, Kanta, Toyota-shi, 471-8571 (JP); KOBATAKE, Yasuhiro, Toyota-shi, 471-8571 (JP); YOKOYAMA, Yuu, Toyota-shi, 471-8571 (JP)
(74) Representative: D Young & Co LLP

(57) **Abstract**

An in-vehicle system comprises a sensor (14); a plurality of display devices; and a processor (101) configured to execute: estimating a first direction that is a direction in which a driver is focusing based on first data that is data acquired by the sensor; and in a case where a predetermined notification to the driver occurs, outputting the predetermined notification at a first display that is a display device selected based on the first direction among the plurality of display devices.

## Description

### BACKGROUND

### Technical Field

The present disclosure relates to a vehicle technique.

### Description of the Related Art

There is a technique of providing information for reducing burden of a driver who drives an automobile. In association with this, for example, Japanese Patent No. 7306210 discloses an in-vehicle system in which a display for providing information is arranged in the vicinity of a steering wheel.

### SUMMARY

The present disclosure is directed to outputting a notification at a location where the notification easily comes into sight of a driver.

One aspect of an embodiment of the present disclosure is an in-vehicle system comprising:
a sensor;
a plurality of display devices; and
a processor configured to execute:
   estimating a first direction that is a direction in which a driver is focusing based on first data that is data acquired by the sensor; and
   in a case where a predetermined notification to the driver occurs, outputting the predetermined notification at a first display that is a display device selected based on the first direction among the plurality of display devices.

One aspect of an embodiment of the present disclosure is an information processing apparatus that outputs information at a plurality of display devices provided in front of a driver's seat within a vehicle cabin, the information processing apparatus comprising a processor configured to execute:
estimating a first direction that is a direction in which a driver of a vehicle with the plurality of display devices is focusing based on first data that is data acquired by a sensor; and
in a case where a predetermined notification from the vehicle to the driver occurs, outputting the predetermined notification at a first display that is a display device selected based on the first direction among the plurality of display devices.

One aspect of an embodiment of the present disclosure is an information processing method to be executed by an in-vehicle system including an information processing apparatus that outputs information via a plurality of display devices, the information processing method comprising:
a step of estimating a first direction that is a direction in which a driver of a vehicle with the in-vehicle system is focusing based on first data that is data acquired by a sensor; and
a step of, in a case where a predetermined notification from the in-vehicle system to the driver occurs, outputting the predetermined notification at a first display that is a display device selected based on the first direction among the plurality of display devices.

Further, another aspect includes a vehicle on which the above-described in-vehicle system is mounted, a program for causing a computer to execute the above-described information processing method, or a computer-readable storage medium storing the program in a non-transitory manner.

According to the present disclosure, it is possible to output a notification at a location where the notification easily comes into sight of a driver.

### BRIEF DESCRIPTION OF THE DRAWINGS

Fig. 1 is a view illustrating a vehicle interior of a vehicle 1 according to an embodiment.
Fig. 2 is an enlarged view of a steering wheel 4 and therearound.
Fig. 3 is a view illustrating an example of components of vehicle 1.
Fig. 4 is a view illustrating an example of components of vehicle ECU 10.
Fig. 5 is a view illustrating a list of screens to be output at an outer display.
Fig. 6A is a view illustrating an example of a screen to be output at the outer display.
Fig. 6B is a view illustrating an example of a screen to be output at the outer display.
Fig. 7A is a view illustrating an example of a screen to be output at the outer display.
Fig. 7B is a view illustrating an example of a screen to be output at the outer display.
Fig. 7C is a view illustrating an example of a screen to be output at the outer display.
Fig. 7D is a view illustrating an example of a screen to be output at the outer display.
Fig. 8 is a view illustrating a list of screens to be output at an inner display.
Fig. 9A is a view illustrating an example of a screen to be output at the inner display.
Fig. 9B is a view illustrating an example of a screen to be output at the inner display.
Fig. 10A is a view illustrating an example of a screen to be output at the inner display.
Fig. 10B is a view illustrating an example of a screen to be output at the inner display.
Fig. 10C is a view illustrating an example of a screen to be output at the inner display.
Fig. 10D is a view illustrating an example of a screen to be output at the inner display.
Fig. 11 is a flowchart of processing to be executed by an HMI controller 1011.
Fig. 12 is a flowchart of processing of outputting a notification at a display device on which operation is being performed based on data for determining the display device on which a driver is performing operation.
Fig. 13 is a view illustrating an example of a display device according to a modification.

### DESCRIPTION OF THE EMBODIMENTS

In recent years, in accordance with sophistication of an automobile, a display for providing information is becoming larger, or the number of displays is increasing.

For example, a method has been proposed in which a large touch panel display is arranged between a driver's seat and a passenger's seat in a front portion of a vehicle cabin, and operation regarding the vehicle and information provision are collectively performed.

However, in such a method, in a case where a driver operates a component provided in the vehicle or confirms output information, a line of sight of the driver largely moves. The movement of the line of sight of the driver is preferably made minimum for safety reasons of traveling of the vehicle.

Typically, a display device such as a liquid crystal is often arranged at a portion at which an instrumental panel has been arranged in related art, in front of the driver's seat, and movement of the line of sight can be made minimum by outputting information at the display device.

However, there is a limit in a size of the display device arranged in a front portion, and all the information necessary for the driver cannot be necessarily displayed. Further, if these kinds of information are output in the same region at the same time, for example, information necessary for traveling of the vehicle and auxiliary information such as entertainment are mixed, which inhibits intuitive information communication.

Further, there is a problem in arrangement of an input interface for operation.

For example, a steering wheel including a cursor key and a push-button switch and enabling input operation while driving is known. However, in such an input interface, layout of buttons, and the like, is fixed, and thus, it is difficult to adapt to a plurality of different targets. For example, while the driver can increase or decrease a set temperature of an air conditioner with two physical keys, the driver cannot directly designate any point on a map with physical keys.

While a mode in which operation is performed through a touch panel is conceivable, as described above, the touch panel display arranged in the front portion in the vehicle cabin is located far from the steering wheel, and thus, the driver largely moves his/her hand in addition to movement of the line of sight.

To solve these problems, a display device enabling input operation through touch is preferably arranged in the vicinity of the steering wheel.

The present disclosure in its one aspect provides an in-vehicle system comprising:
a sensor;
a plurality of display devices; and
a processor configured to execute:
   estimating a first direction that is a direction in which a driver is focusing based on first data that is data acquired by the sensor; and
   in a case where a predetermined notification to the driver occurs, outputting the predetermined notification at a first display that is a display device selected based on the first direction among the plurality of display devices.

The display device includes a pair of display units arranged at positions on both sides of a steering wheel. Further, the pair of display units has a configuration that enables touch operation by a touch panel.

The first data is data acquired by a sensor included in the in-vehicle system. For example, the first data may be image data acquired by an in-vehicle camera, temperature map data acquired by an infrared sensor, detection data acquired by a touch sensor, or the like.

The first direction indicates a direction in which a driver of a vehicle including the in-vehicle system according to one aspect of the present disclosure is focusing. The first direction is determined based on the first data.

The first display indicates a display present in a region within a predetermined range (within a predetermined angle) from a virtual axis indicating the first direction.

The controller determines the first direction based on the first data, and in a case where there is a predetermined notification to the driver, outputs the predetermined notification at a first display that is a display device selected based on the first direction.

According to such a configuration, it is possible to output a notification at a location where the notification easily comes into sight of the driver.

The controller may output the predetermined notification at a display device closest to the axis indicating the first direction.

This enables the in-vehicle system according to one aspect of the present disclosure to output a notification at a display device that is most likely to come into sight of the driver.

Further, the controller may determine a display device present in a region within a predetermined range from the axis indicating the first direction as a first display among the plurality of display devices and output the predetermined notification at the first display.

This enables the in-vehicle system according to one aspect of the present disclosure to output a notification at a display device located in a range in which the notification is likely to come into sight of the driver.

Further, the controller may determine a display device with highest priority assigned in advance as the first display in a case where a plurality of display devices is present in the region within the predetermined range from the axis indicating the first direction and output the predetermined notification at the first display.

For example, there is a case where the in-vehicle system according to one aspect of the present disclosure assigns priority of a display device at which the predetermined notification is to be output based on balance with display of other information. The in-vehicle system according to one aspect of the present disclosure can output the notification in appropriate arrangement in the vehicle by outputting the predetermined notification at the display device with high priority.

Further, in a case where a display device is not present in the region within the predetermined range from the axis indicating the first direction, the controller may determine the first display based on a type of the notification or an occurrence source of the notification and output the predetermined notification at the first display.

This enables the in-vehicle system according to one aspect of the present disclosure to output a notification at a display device determined in a rational manner also in a case where a display device close to a direction of the line of sight of the driver is not present.

Further, the controller may determine whether or not the driver is focusing on the first display based on second data that is data acquired by the sensor, different from the first data, after outputting the predetermined notification at the first display, and in a case where it is determined that the driver is not focusing on the first display, estimate a second direction that is a direction in which the driver is focusing, different from the first direction, and output the predetermined notification at a second display that is a display device selected based on the second direction.

This enables the in-vehicle system according to one aspect of the present disclosure to output the notification at a more appropriate location in accordance with movement of the line of sight of the driver.

Further, the first data may include data for determining a display device on which the driver is performing operation among the plurality of display devices, and in a case where it is determined that the driver is performing operation on a third display based on the first data, the controller may output the predetermined notification at the third display.

For example, it is assumed that, in a case where the driver performs operation on a display during driving, the driver is often focusing on the display on which the driver is performing operation. Thus, the in-vehicle system according to one aspect of the present disclosure may output the predetermined notification at the display on which the driver himself/herself is performing operation.

This enables the in-vehicle system according to one aspect of the present disclosure to output a notification at a display on which the driver is highly likely to be focusing based on behavior of the driver. Thus, the in-vehicle system according to one aspect of the present disclosure can output a notification at a display that is highly likely to come into sight of the driver.

Further, the sensor may include an in-vehicle camera, and the first data may include image data captured by the in-vehicle camera.

Further, the sensor may include an in-vehicle camera, and the second data may include image data captured by the in-vehicle camera.

This enables the in-vehicle system according to one aspect of the present disclosure to estimate a direction of the line of sight of the driver by analyzing an image of the driver. Thus, the in-vehicle system according to one aspect of the present disclosure can estimate the direction of the line of sight of the driver with high accuracy.

Embodiments of the present disclosure will be described below based on the drawings. Configurations of the embodiments described below are examples, and the present disclosure is not limited to the configurations of the embodiments.

### (First Embodiment)

Outline of a vehicle system according to the first embodiment will be described. The vehicle system according to the present embodiment includes a vehicle 1.

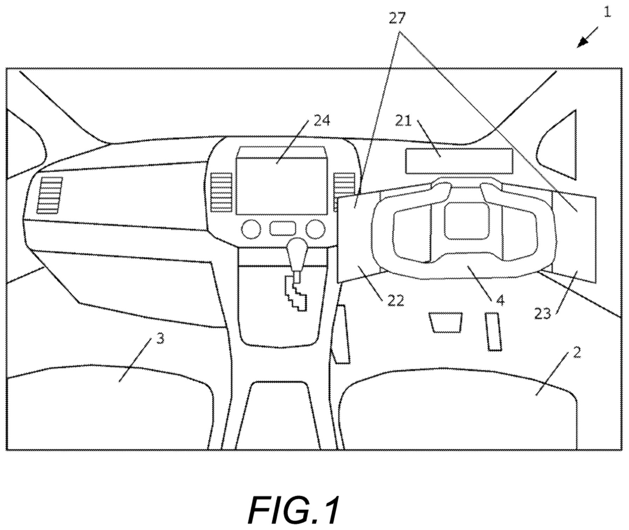

The vehicle 1 will be described with reference to Fig. 1.

Fig. 1 is a view illustrating a vehicle interior of the vehicle 1. As illustrated, a driver's seat 2 and a passenger's seat 3 are provided in a vehicle cabin of the vehicle 1. Note that the vehicle 1 of the present embodiment is a right-hand-drive vehicle, and the driver's seat 2 is provided in a right portion of the vehicle.

A steering wheel 4 is disposed in front of the driver's seat 2. Note that the steering wheel may have a circular shape or may have a U-shape (so-called, irregularly shaped steering wheel) as illustrated.

The steering wheel 4 is connected to a steering device provided in the vehicle 1 via a steering column. The steering column is covered with a column cover.

The passenger's seat 3 is provided on a left side of the driver's seat 2, and a center display 24 is disposed on a vehicle front side at an intermediate position of the driver's seat 2 and the passenger's seat 3. At the center display 24, for example, auxiliary information such as car navigation, content regarding entertainment such as audio and TV, or the like, is displayed.

A meter display 21 is provided on a vehicle front side of the steering wheel 4. The meter display 21 is a full-screen display that is located in front of the driver's seat 2 and provides various kinds of information to the driver of the vehicle 1. At the meter display 21, information necessary for traveling of the vehicle such as, for example, a speed of the vehicle (vehicle speed), an engine speed (in a case where the vehicle 1 includes an engine), a charging and discharging status (in a case where the vehicle 1 includes a battery for driving), and a traveling distance is displayed. The meter display 21 is one example of a "meter unit" in the present disclosure.

A pair of display devices 27 is provided in front of the driver's seat 2 in the vehicle cabin. The pair of display devices 27 includes touch panel displays respectively arranged at positions on both sides of the steering wheel 4. In the present embodiment, the display arranged on an inner side of the vehicle will be referred to as an inner display, and the display arranged on an outer side of the vehicle will be referred to as an outer display. The inner display 22 and the outer display 23 are connected to an instrument panel of the vehicle 1.

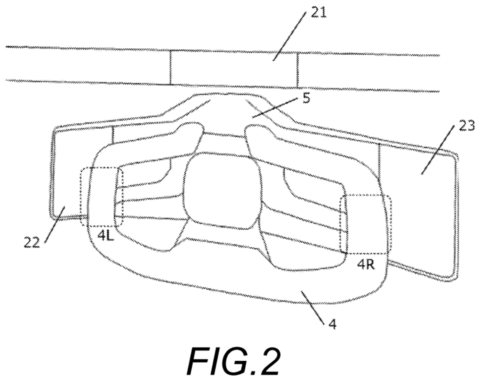

Detailed structures of the inner display 22 and the outer display 23 will be described with reference to Fig. 2.

The inner display 22 and the outer display 23 are vertically long displays and connected to a support portion 5 that is a member that supports the respective displays. The support portion 5 has a shape protruding in a left and right direction of the steering wheel. The outer display 23 is connected to a right end portion of the support portion 5 toward a front portion of the vehicle, and the inner display 22 is connected to a left end portion toward the front portion of the vehicle. By this means, display surfaces of the displays can be arranged in the vicinity of a gripping portion of the steering wheel 4.

Note that the above description is an example in a case where the vehicle 1 is a right-hand-drive vehicle, and in a case where the vehicle 1 is a left-hand-drive vehicle, the right side and the left side are inverted. In other words, the outer display 23 is connected to the left end portion of the support portion 5 toward the front portion of the vehicle, and the inner display 22 is connected to the right end portion toward the front portion of the vehicle.

The support portion 5 may also serve as a column cover that covers the steering column. The support portion 5 has a shape of extending in a left direction and a right direction (vehicle width direction) from a portion at which the steering column penetrates, and each extending toward a rear portion of the vehicle and bending so that an angle of each portion becomes small with respect to the left and right direction of the steering wheel.

Further, the inner display 22 and the outer display 23 are arranged so as to have an angle with respect to the left and right direction of the steering wheel and so as to be inclined toward the steering wheel. In other words, the inner display 22 is arranged so that a portion on the inner side of the vehicle protrudes more to the rear portion of the vehicle, and the outer display 23 is arranged so that a portion on the outer side of the vehicle protrudes more to the rear portion of the vehicle. In this manner, the inner display 22 and the outer display 23 are arranged so as to respectively face the driver.

A region 4R indicated with a dashed line in Fig. 2 is a portion (gripping portion) of the steering wheel 4 to be gripped by the right hand, and a region 4L indicated with a dashed line in Fig. 2 is a portion (gripping portion) of the steering wheel 4 to be gripped by the left hand. By the support portion 5 having the shape described above, positions of the inner display 22 and the outer display 23 in a vehicle front-back direction can be made closer to the gripping portions of the steering wheel 4. Thus, a movement amount of the hand in a case where the driver performs touch operation on the inner display 22 or the outer display 23 during driving can be made smaller.

### [System Configuration]

Configurations of respective devices constituting a vehicle system of the vehicle 1 will be described next.

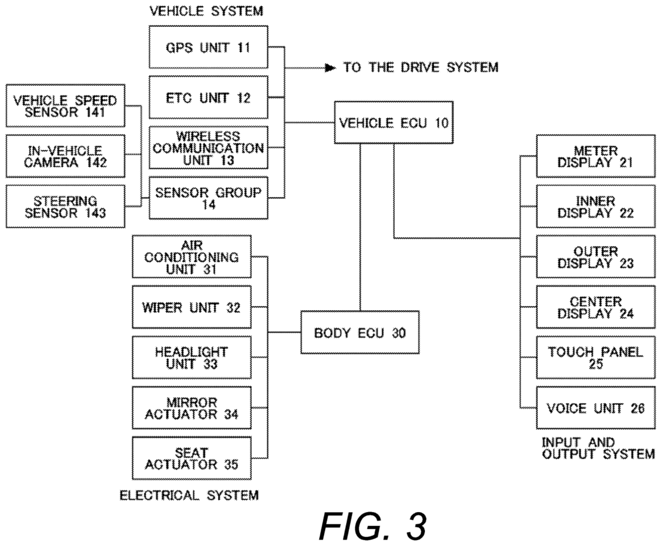

First, components of the vehicle 1 will be described. Fig. 3 is a view schematically illustrating an example of the configuration of the vehicle 1. The vehicle 1 includes a vehicle-related system, an electrical system, and an input/output system.

The vehicle-related system is a system that controls movement of the vehicle 1. The vehicle-related system includes a plurality of components related to traveling of the vehicle.

The input/output system is a system that provides information to an occupant of the vehicle 1 and acquires an input from the occupant. The input/output system includes a plurality of components that inputs/outputs information.

The electrical system is a system that controls electrical components provided in a body of the vehicle. The electrical system includes a plurality of components regarding the electrical components provided in the body of the vehicle.

The components included in each system may include a plurality of electrical components and an ECU that controls the electrical components.

Each of the vehicle ECU 10 and the body ECU 30 can be configured as a computer including a processor (such as a CPU and a GPU), a main memory (such as a RAM and a ROM), and an auxiliary memory (such as an EPROM, a hard disk drive and a removable medium). In the auxiliary memory, an operating system (OS), various kinds of programs, various kinds of tables, and the like, are stored, and each function (software module) that matches a predetermined purpose as will be described later can be implemented by a program stored therein being executed. However, some or all of the functions may be implemented as hardware modules by, for example, a hardware circuit such as an ASIC and an FPGA.

A plurality of components related to traveling of the vehicle is connected to the vehicle ECU 10.

The GPS unit 11 is a unit for acquiring position information of the vehicle 1. The GPS unit 11 includes a GPS antenna and a positioning module for measuring position information. The GPS antenna is an antenna that receives a positioning signal transmitted from a positioning satellite (also referred to as a GNSS satellite). The positioning module is a module that calculates position information based on the signal received by the GPS antenna.

An electronic toll collection system (ETC) unit 12 is a unit to be used for collecting a toll of a toll road through wireless communication. The ETC unit 12 includes an antenna and a communication module.

The wireless communication unit 13 includes an antenna and a communication module for performing wireless communication. The antenna is an antenna element that inputs/outputs a wireless signal. In the present embodiment, the antenna conforms to mobile communication (for example, mobile communication such as 3G, 4G and 5G). Note that the antenna may include a plurality of physical antennas. The communication module is a module for performing mobile communication.

Further, the wireless communication unit 13 may include communication modules other than the communication module for mobile communication. For example, the wireless communication unit 13 may include a communication module through Bluetooth (registered trademark). This enables wireless connection with a user terminal located inside the vehicle, so that it is possible to provide a service (such as, for example, a hands-free call) in coordination with the user terminal.

The sensor group 14 is a collection of a plurality of sensors for acquiring sensor data to be utilized in traveling of the vehicle. The sensors may include a sensor that acquires a physical amount or a sensor that acquires image data, and the like. In the present embodiment, as the sensor, a sensor (vehicle speed sensor 141) that detects a vehicle speed, an image sensor (in-vehicle camera 142) that acquires an image ahead of the vehicle, and an image sensor (vehicle interior camera 143) that acquires an image within a vehicle cabin are exemplified.

Note that components (such as, for example, an engine, a motor, a battery, and a transmission) belonging to a drive system may be further connected to the vehicle ECU 10.

A plurality of electrical components included in the vehicle is connected to the body ECU 30.

In the present embodiment, a car air conditioner, a wiper, a headlight, a sideview mirror, and a powered seat will be exemplified as the electrical components included in the vehicle.

An air conditioner unit 31 is a car air conditioner of the vehicle 1. The air conditioner unit 31 includes, for example, a cooling unit, a heating unit, a compressor, a capacitor, and the like. Further, the air conditioner unit 31 may include a controller for controlling these.

A wiper unit 32 includes a front wiper, a rear wiper, a motor for driving these, and the like.

A headlight unit 33 includes a headlight of the vehicle 1, and a unit for driving the headlight. The headlight is, for example, configured to be able to switch between high beam and low beam. Note that in a case where the headlight of the vehicle 1 is an adaptive headlight, it is also possible to control radiation of light based on a command from the body ECU. The headlight unit 33 may further include a taillight, a stop lamp, a direction indicator and/or a unit for driving these.

A mirror actuator 34 includes sideview mirrors disposed at left and right portions of the vehicle 1, and a drive unit for driving the mirrors. Angles of the sideview mirrors can be adjusted upward, downward, leftward, and rightward by the mirror actuator 34.

A seat actuator 35 includes a drive unit for adjusting positions of seats provided in the vehicle 1. Positions, heights, angles, and the like, of seating surfaces and backrests can be adjusted by the seat actuator 35.

A device for inputting/outputting information will be described next.

In the present embodiment, the vehicle 1 includes four displays of the meter display 21, the inner display 22, the outer display 23, and the center display 24 as displays for outputting information.

The meter display 21 is a display arranged in front of the driver, and information regarding the vehicle 1 is output at the meter display 21. While information regarding a state of the vehicle such as, for example, a vehicle speed, an engine speed, a fuel remaining amount, a battery remaining amount, a charging and discharging status, and a traveling distance is mainly output at the meter display 21, information other than this may be output.

The inner display 22 and the outer display 23 are displays arranged on both sides of the steering wheel and including touch panels. As described above, the inner display 22 is arranged on a vehicle center side, and the outer display 23 is arranged on a vehicle outer side.

In a case where the vehicle 1 is a right-hand-drive vehicle, the inner display 22 is arranged on a left side in a traveling direction of the vehicle, and the outer display 23 is arranged on a right side in the traveling direction of the vehicle. In a case where the vehicle 1 is a left-hand-drive vehicle, the inner display 22 is arranged on the right side in the traveling direction of the vehicle, and the outer display 23 is arranged on the left side in the traveling direction of the vehicle.

The center display 24 is a display arranged at the center of the vehicle. The center display 24 is arranged at a place where a display of a car navigation device has been arranged in the related art. At the center display 24, for example, auxiliary information such as car navigation, content regarding entertainment such as audio and TV, and the like, are displayed.

A touch panel 25 is a unit for detecting touch operation performed on the display described above. In the present embodiment, each of the inner display 22, the outer display 23, and the center display 24 includes the touch panel 25, and operation can be performed by touch. The touch panel 25 detects touch operation performed on these displays and transmits detected content to the vehicle ECU 10.

A speech unit 26 is a unit that inputs/outputs information by speech. The speech unit 26 may include, for example, a speaker and a microphone.

A detailed configuration of the vehicle ECU 10 will be described next.

The vehicle ECU 10 is connected to a vehicle-related system and a drive system (powertrain system), and thereby can control the vehicle 1. Further, the vehicle ECU 10 has a function of inputting/outputting information by components included in the input/output system, and a function of controlling an electrical system via the body ECU 30 that controls the electrical system.

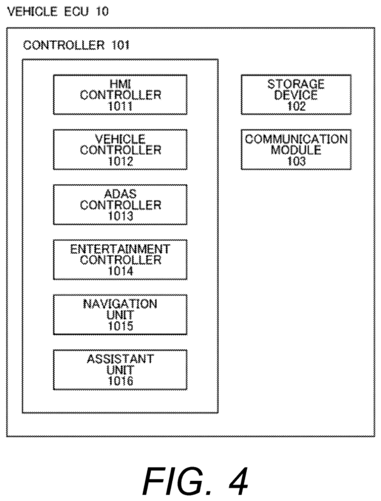

Fig. 4 is a view illustrating a detailed configuration of the vehicle ECU 10.

The vehicle ECU 10 includes a control device 101, a main memory 102, and a communication module 103.

The control device 101 is an arithmetic unit that implements various kinds of functions of the vehicle ECU 10 by executing predetermined programs. The control device 101 can be implemented by, for example, a hardware processor such as a CPU. Further, the control device 101 may include a RAM, a read only memory (ROM), a cache memory, and the like.

In the present embodiment, the control device 101 included in the vehicle ECU 10 includes six software modules of an HMI controller 1011, a vehicle controller 1012, an ADAS controller 1013, an entertainment controller 1014, a navigation unit 1015, and an assistance unit 1016. Each software module may be implemented by the control device 101 (such as a CPU) executing a program stored in a main memory 102 which will be described later. Information processing to be executed by the software module is synonymous with information processing to be executed by the control device 101 (such as the CPU).

The HMI controller 1011 generates a user interface for controlling various kinds of components included in the vehicle and provides the user interface to an occupant of the vehicle via the input/output system. Further, the HMI controller 1011 passes information (for example, a command for implementing control designated by the user) input via the input/output system to the corresponding software module.

This makes it possible to control any component included in the vehicle via the user interface.

Note that in the following description, a command for controlling a component included in the vehicle 1, generated by the user will be referred to as a "user command". For example, a command for changing a temperature of the air conditioner, a command for changing a drive mode, a command for making a telephone call, a command for playing music, or the like, is an example of a "user command".

Note that the component included in the vehicle may be an electrical component such as a headlight and a wiper. Further, the component included in the vehicle may be an in-vehicle computer or a software module (such as, for example, autonomous traveling software and navigation software) to be executed by the in-vehicle computer.

Note that the HMI controller 1011 selects an output destination of the user interface from a plurality of displays (the meter display 21, the inner display 22, the outer display 23, and the center display 24) according to a type of a component to be controlled. A specific configuration will be described later.

The vehicle controller 1012 controls components included in the vehicle-related system or components included in the drive system.

The vehicle controller 1012 may control a target component (for example, a drive motor) based on a command (for example, an acceleration command) received from another component (for example, the ADAS controller 1013 which will be described later) or may control a target component (for example, the headlight unit) based on a user command (for example, a command of turning on the headlight) acquired via the HMI controller 1011.

The ADAS controller 1013 controls an advanced driver-assistance system. The ADAS controller 1013 implements driving assistance such as cruise control, precrash safety, and lane keeping assistance by generating a control command of the vehicle, for example, based on sensor information acquired from the in-vehicle sensor included in the sensor group 14. The ADAS controller 1013, for example, controls the vehicle-related system and the drive system by transmitting a control command to the vehicle controller 1012.

The entertainment controller 1014 performs control regarding entertainment to be provided to the occupant of the vehicle. Examples of a function regarding entertainment can include, for example, an audio function and a TV/radio function.

The navigation unit 1015 provides a car navigation function. The navigation unit 1015 can generate and provide rout guidance of the vehicle based on the position information acquired from the GPS unit 11 and traffic information acquired from the wireless communication unit 13. The navigation unit 1015, for example, may accept designation of a destination and a waypoint of the vehicle and may output information regarding the generated route via the HMI controller 1011.

The assistance unit 1016 provides information to the occupant of the vehicle by executing a language model that enables dialogue in natural language. The language model may be, for example, a large language model (LLM). For example, information can be provided in natural language by executing the LLM having information regarding the occupant of the vehicle. Note that in a case where there is a plurality of occupants of the vehicle, the assistance unit 1016 may acquire language models corresponding to respective occupants via a network and execute any language model.

The main memory 102 is means for storing information and is constituted with a storage medium such as a RAM, a magnetic disc, and a flash memory. In the main memory 102, a program to be executed at the control device 101, data to be utilized by the program, and the like, are stored.

The communication module 103 is a communication interface for connecting the vehicle ECU 10 to a vehicle network. The communication module 103 is configured to be able to perform communication with a component included in the vehicle 1 via a network such as a controller area network (CAN).

Note that components can be omitted, replaced, and added as appropriate in a specific configuration of the vehicle ECU 10 in accordance with embodiments. For example, the control device 101 may include a plurality of hardware processors. The hardware processor may include a microprocessor, an FPGA, a GPU, and the like. Further, an input/output device (such as, for example, an optical drive) other than the exemplified devices may be added. Further, the vehicle ECU 10 may include a plurality of computers. In this case, hardware configurations of the respective computers may be the same or do not have to be the same.

### [Interface Screen to be Provided by HMI Controller]

A user interface to be provided by the HMI controller 1011 will be described next.

The HMI controller 1011 can generate a plurality of types of graphical user interface (GUI) screens and output the graphical user interface screens to the plurality of displays described above.

In the present embodiment, the HMI controller 1011 outputs information while aggregating information regarding control of the vehicle at the outer display 23 and aggregating information regarding convenience and comfortability of the occupant at the inner display 22. This enables the occupant of the vehicle 1 to intuitively recognize a display on which desired information is to be output between the left and right displays. Further, operating surfaces of the touch panels provided on the inner display 22 and the outer display 23 are arranged in the vicinity of the steering wheel. This can minimize a movement amount of the line of sight and the hand of the driver of the vehicle.

The HMI controller 1011 can switch a screen to be output at the outer display 23 among a plurality of types of screens.

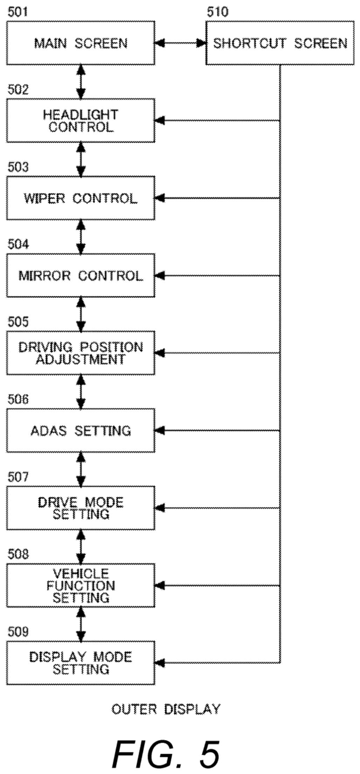

Fig. 5 is a view for describing transition of a plurality of types of screens to be output at the outer display 23. As illustrated, the HMI controller 1011 can output a plurality of screens, mainly, a main screen 501 at the outer display 23.

### (1) Main Screen 501

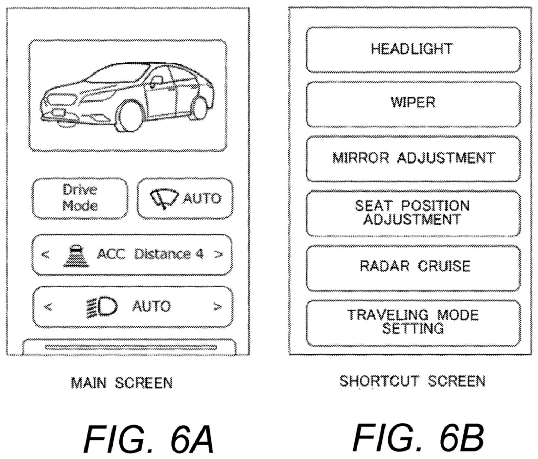

The main screen 501 is a screen to be normally displayed at the outer display during traveling. Fig. 6(A) is a view illustrating an example of the main screen 501. Display content of the main screen can be customized by the user.

### (2) Headlight Control Screen 502

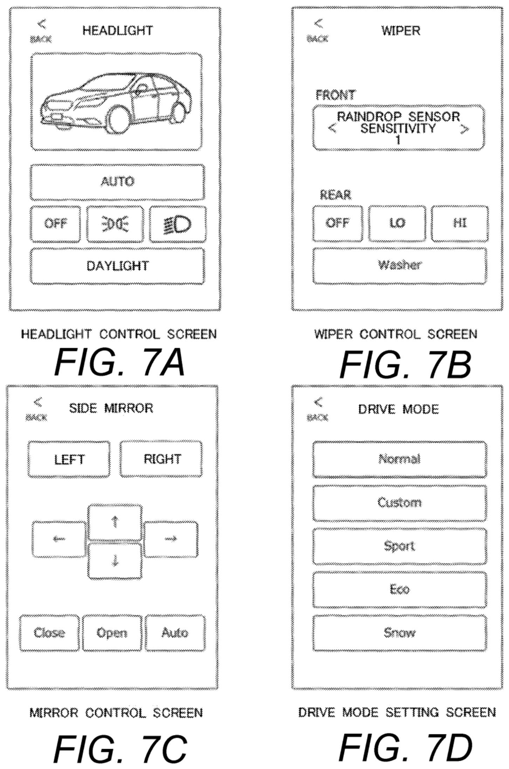

A headlight control screen 502 is a screen for setting a lighting state of the headlight included in the vehicle 1. Fig. 7(A) is a view illustrating an example of the headlight control screen 502.

On the headlight control screen 502, the lighting state (such as automated, turned-on, turned-off, parking light, and daylight) of the headlight can be selected. The vehicle controller 1012 controls the headlight unit 33 by generating a user command based on touch operation acquired via the HMI controller 1011 and transmitting the user command to the body ECU 30.

Further, the vehicle controller 1012 may acquire data indicating the lighting state of the headlight from the body ECU 30 and reflect the lighting state on the screen via the HMI controller 1011. For example, the vehicle controller 1012 may reflect a current lighting state of the headlight on a graphic of the vehicle drawn on the screen.

### (3) Wiper Control Screen 503

A wiper control screen 503 is a screen for setting an operating state of the wiper (front/rear) included in the vehicle 1. Fig. 7(B) is a view illustrating an example of the wiper control screen 503.

On the wiper control screen 503, an operating state (such as stopped, automated operation, intermittent operation, and continuous operation) of the wiper can be selected. The vehicle controller 1012 controls the wiper unit 32 by generating a user command based on the touch operation acquired via the HMI controller 1011 and transmitting the user command to the body ECU 30.

Further, the vehicle controller 1012 may acquire data indicating the operating state of the wiper from the body ECU 30 and reflect the operating state on the screen via the HMI controller 1011. For example, the vehicle controller 1012 may reflect a current operating state of the wiper on the graphic of the vehicle drawn on the screen.

### (4) Mirror Control Screen 504

A mirror control screen 504 is a screen for adjusting an expanded state and an angle of the sideview mirror included in the vehicle 1. Fig. 7(C) is a view illustrating an example of the mirror control screen 504.

On the mirror control screen 504, a state (stored/expanded state and an angle) of the sideview mirror can be selected. The vehicle controller 1012 controls the mirror actuator 34 by generating a user command based on the touch operation acquired via the HMI controller 1011 and transmitting the user command to the body ECU 30.

Further, the vehicle controller 1012 may acquire data indicating the state of the sideview mirror from the body ECU 30 and reflect the operating state on the screen via the HMI controller 1011. For example, the vehicle controller 1012 may reflect a current expanded/stored state of the sideview mirror on the graphic of the vehicle drawn on the screen.

### (5) Driving Position Adjustment Screen 505

A driving position adjustment screen 505 is a screen for adjusting a position/angle of the seat (a seating surface and a backrest) included in the vehicle 1 and a position/angle of the steering wheel.

On the driving position adjustment screen 505, positions and angles of the seat and the steering wheel can be set. The vehicle controller 1012 controls the seat actuator 35, and the like, by acquiring via the HMI controller 1011, the touch operation acquired via the HMI controller 1011, generating a user command based on the touch operation and transmitting the user command to the body ECU 30.

### (6) ADAS Setting Screen 506

An ADAS setting screen 506 is a screen for making a notification of an operating state of the advanced driver-assistance system included in the vehicle 1 and making settings.

For example, in a case where the advanced driver-assistance system included in the vehicle 1 includes an autocruise function, the user of the vehicle 1 can set a cruising speed, a distance between vehicles, whether or not to follow the preceding vehicle, whether or not to trace a lane, and the like, via the ADAS setting screen 506.

The information included in the ADAS setting screen 506 can be generated by the ADAS controller 1013.

### (7) Drive Mode Setting Screen 507

A drive mode setting screen 507 is a screen for setting a drive mode of the vehicle 1. Fig. 7(D) is a view illustrating an example of the drive mode setting screen 507.

For example, the user of the vehicle 1 can select a mode from a plurality of modes such as a normal mode, a sports mode, an energy saving mode, and a snow mode via the drive mode setting screen 507. The vehicle controller 1012 changes the drive mode of the vehicle based on the selection.

### (8) Vehicle Function Setting Screen 508

A vehicle function setting screen 508 is a screen for utilizing other functions of the vehicle 1. Examples of other functions of the vehicle 1 can include, for example, opening/closing of an electric rear door, adjustment of a suspension, and the like.

### (9) Display Mode Setting Screen 509

A display mode setting screen 509 is a screen for setting a type, and the like, of information to be displayed at the meter display 21. For example, in a case where a plurality of kinds of information other than a speed can be displayed at the meter display 21, the user of the vehicle 1 can customize information to be displayed at the meter display 21 via the display mode setting screen 509.

A screen can be switched among the plurality of screens as exemplified above by, for example, predetermined operation such as horizontal swipe being performed on, for example, the touch panel provided on the outer display 23.

Further, the HMI controller 1011 can display a shortcut screen 510 for jumping to each screen on the outer display 23. Fig. 6(B) is a view illustrating an example of the shortcut screen 510. The shortcut screen can be called by, for example, predetermined operation (for example, operation of swiping upward from a lower portion of the screen) being performed on each screen including the main screen 501. On the shortcut screen 510, a plurality of interfaces (for example, buttons) for transitioning to the respective screens is arranged, and the screen can move to a target screen by operation being performed on the interface.

In this manner, the HMI controller 1011 aggregates and outputs at the outer display 23 at least information regarding control of the vehicle.

The information regarding control of the vehicle is typically information related to traveling control of the vehicle. Examples of the information related to traveling control of the vehicle can include, for example, information for controlling components belonging to the vehicle-related system, information for controlling components belonging to the drive system, and the like. Further, information for controlling components necessary for causing the vehicle to appropriately travel such as a light and a wiper among components belonging to the electrical system can be also regarded as information related to traveling control of the vehicle.

Note that information not directly related to traveling control of the vehicle can be also output at the outer display 23 if the information is related to control of the vehicle. For example, information for controlling an electric door included in the vehicle may be output at the outer display 23.

In a similar manner, the HMI controller 1011 can switch a screen to be output at the inner display 22 among a plurality of types of screens.

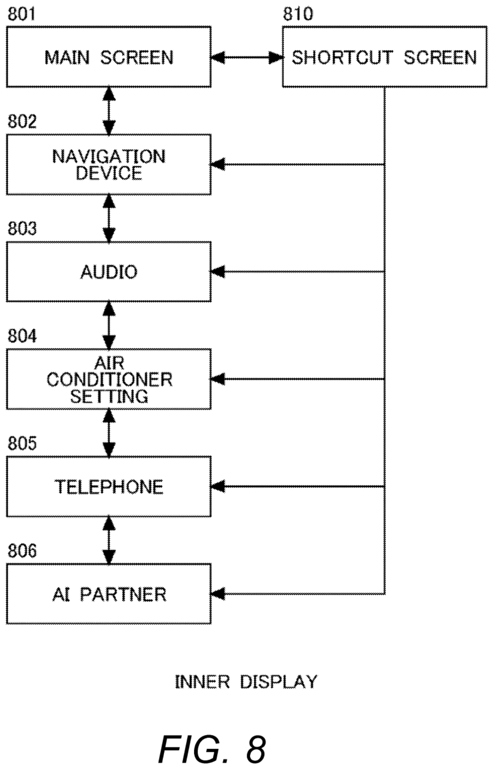

Fig. 8 is a view for describing transition of the plurality of types of screens to be output at the inner display 22. As illustrated, the HMI controller 1011 can output a plurality of screens, mainly a main screen 801, at the inner display 22.

### (1) Main Screen 801

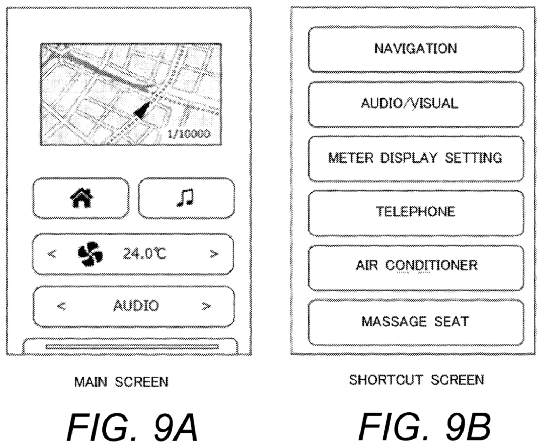

The main screen 801 is a screen to be normally displayed at the inner display during traveling. Fig. 9(A) is a view illustrating an example of the main screen 801. Display content of the main screen can be customized by the user.

### (2) Navigation Screen 802

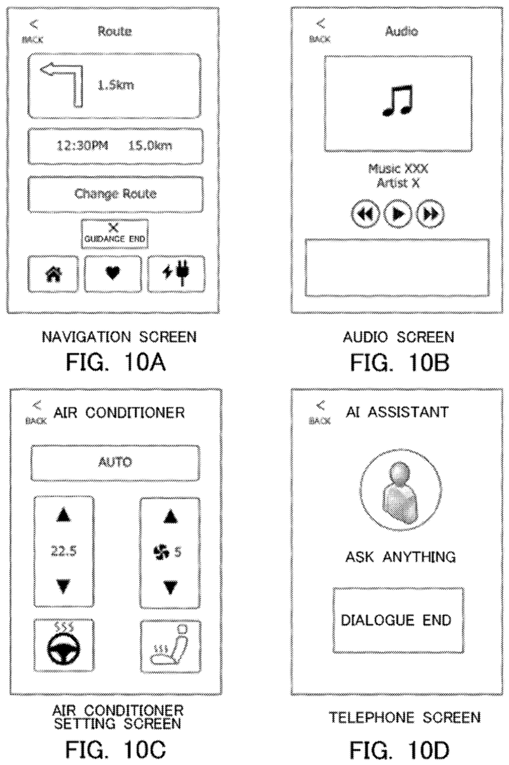

A navigation screen 802 is a screen related to car navigation. Fig. 10(A) is a view illustrating an example of the navigation screen 802. Information included in the navigation screen 802 is generated by the navigation unit 1015.

Note that in a case where map information in the car navigation is displayed at the center display 24, auxiliary information regarding a route of the vehicle 1 may be output at the navigation screen 802. Examples of the auxiliary information regarding the route can include, for example, guidance of a point at which the vehicle should turn right/left next, or the like, estimated time of arrival, a distance to go, and the like.

Further, part of the information displayed at the center display 24 and the user interfaces may be included in the navigation screen 802.

For example, user interfaces with high usage frequencies such as a button for starting rout guidance to home, a button for calling a bookmark, and a button for starting rout guidance to a charging spot can be arranged on the navigation screen 802.

### (3) Audio Screen 803

An audio screen 803 is a screen related to an audio function of the vehicle 1. Fig. 10(B) is a view illustrating an example of the audio screen 803. Information included in the audio screen 803 is generated by the entertainment controller 1014. The entertainment controller 1014 can acquire and play music via a network or a medium. The audio screen 803 can include information regarding music that is being played and an interface for selecting music.

### (4) Air Conditioner Setting Screen 804

An air conditioner setting screen 804 is a screen for controlling the car air conditioner included in the vehicle 1. Fig. 10(C) is a view illustrating an example of the air conditioner setting screen 804.

On the air conditioner setting screen 804, a temperature and airflow of the car air conditioner, and an air conditioning device (such as a steering heater, a seat heater and a defroster) to be operated can be set. The vehicle controller 1012 controls the air conditioner unit 31, and the like, by generating a user command based on operation performed on the screen and transmitting the user command to the body ECU 30.

Note that the car air conditioner is equipment of the vehicle 1 to be controlled by an external command, but is related to comfortability of the occupant, and thus, the air conditioner setting screen 804 is displayed at the inner display 22 instead of being displayed at the outer display 23.

### (5) Phone Screen 805

A phone screen 805 is a screen for wirelessly connecting to the user terminal and making a hands-free call. In a case where the wireless communication unit 13 includes a module for performing wireless communication with the user terminal, it is possible to make a phone call (or receive an incoming call), or the like, from the user terminal via the module.

### (6) AI partner screen 806

An AI partner screen 806 is a screen for having a dialogue with a virtual agent (AI partner) with which the occupant can have a dialogue in natural language. Fig. 10(D) is a view illustrating an example of the AI partner screen 806. The screen includes a character of the virtual agent, and the occupant of the vehicle can obtain information by having a dialogue with the character. A dialogue service in natural language is provided by the assistance unit 1016.

The AI partner screen 806 may include an interface for giving an instruction to the agent. Note that in a case where there is a plurality of occupants of the vehicle, the assistance unit 1016 may be configured to be able to execute any agents corresponding to respective persons. The AI partner screen 806 may include an interface for starting and ending a dialogue with the agent, an interface for switching the agent, and the like.

The plurality of screens as exemplified above can be switched by predetermined operation such as, for example, horizontal swipe being performed on, for example, the touch panel provided on the inner display 22.

Further, the HMI controller 1011 can cause a shortcut screen 810 for jumping to each screen to be displayed on the inner display 22. Fig. 9(B) is a view illustrating an example of the shortcut screen 810. The shortcut screen can be called by, for example, predetermined operation (for example, operation of swiping upward from a lower portion of the screen) being performed on each screen including the main screen 801. On the shortcut screen 810, a plurality of interfaces (for example, buttons) for transitioning to the respective screens is arranged, and the screen can transition to a target screen by operation being performed on the interface.

In this manner, the HMI controller 1011 aggregates and outputs at the inner display 22 information regarding convenience and comfortability of the occupant.

Note that information regarding a component such as a car air conditioner, which constitutes part of the vehicle but is related to convenience or comfortability of the occupant, may be output at the inner display 22 without being handled as information related to control of the vehicle.

In this manner, in a case where target information is applicable to both information regarding control of the vehicle and information regarding convenience (or comfortability) of the occupant, the information may be selectively output at one of the inner display 22 and the outer display 23 in accordance with predetermined standards.

### [Interrupt Display at Interface Screen]

Interrupt display will be described next.

There is a case where a notification to an occupant of the vehicle occurs from various kinds of components during traveling of the vehicle. For example, in a case where the vehicle is connected to a user terminal, it is necessary to make a notification of an incoming call as necessary. Further, in a case where some kind of event (for example, a request for handover from autonomous traveling to manual driving) has occurred during utilization of the ADAS function, it is necessary to make a notification of the occurrence of the event. In a case where a request (notification request) for making such a notification from a component of the vehicle 1 has occurred, the HMI controller 1011 performs interrupt display via the inner display 22 or the outer display 23.

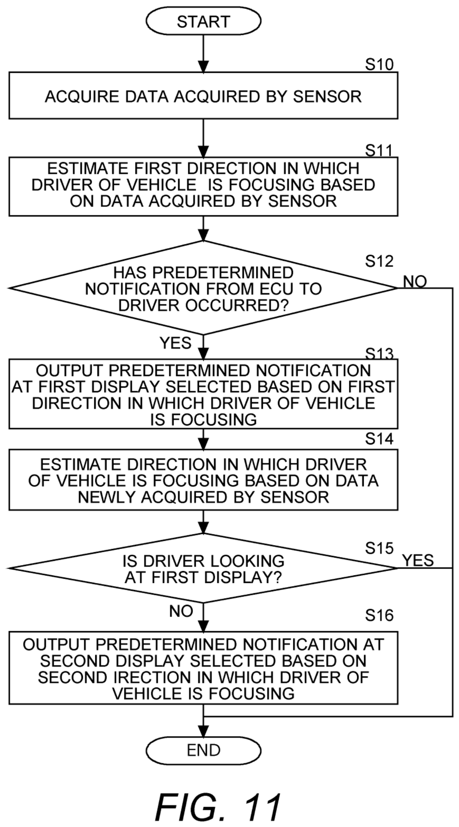

Fig. 11 is a flowchart of processing to be executed by the HMI controller 1011. The processing is periodically executed while a main switch of the vehicle is turned on.

First, in step S10, the HMI controller 1011 acquires data (here, referred to as first data) acquired by one sensor among the sensor group 14 of the vehicle-related system. For example, in step S10, the HMI controller 1011 may acquire image data acquired by the vehicle interior camera 143. Subsequently, the processing transitions to step S11. The vehicle interior camera 143 is a camera capable of capturing an image inside the vehicle cabin and captures a face image of the driver. The vehicle interior camera 143 may be a visible light camera or an infrared camera. The first data may be a visible light image or an infrared image.

In step S11, the HMI controller 1011 estimates a first direction that is a direction in which the driver of the vehicle 1 is focusing based on the first data acquired by the sensor. For example, the HMI controller 1011 may analyze the image data acquired by the vehicle interior camera 143 to determine a direction of the face of the driver and estimate the first direction. Subsequently, the processing transitions to step S12.

In step S12, the HMI controller 1011 determines whether or not a notification to the driver has occurred from the vehicle ECU 10 or the body ECU 30 mounted on the vehicle 1.

In a case where the HMI controller 1011 determines that the notification has occurred, the processing transitions to step S13. In a case where the HMI controller 1011 determines that the notification does not occur, the processing ends.

In step S13, the HMI controller 1011 outputs the notification made to the driver of the vehicle 1 from the HMI controller 1011 at the display device (hereinafter, referred to as a first display) selected based on the first direction. Here, the display device selected based on the first direction may be a display device closest to a virtual axis representing the first direction.

In step S14, a direction in which the driver of the vehicle is focusing is estimated based on data (here, referred to as second data) newly acquired by one sensor included in the sensor group 14 after a predetermined period has elapsed since the predetermined notification had been output at the first display. For example, the HMI controller 1011 may analyze the image data acquired by the vehicle interior camera 143 to determine the direction of the face of the driver and estimate the direction in which the driver of the vehicle is focusing. Here, the predetermined period is a period enough to determine whether or not the driver has visually confirmed the notification output at the first display.

In step S15, the HMI controller 1011 determines whether the driver is focusing on the first display based on the second data. In a case where the HMI controller 1011 determines that the driver is not focusing on the first display, the processing transitions to step S16. In a case where the HMI controller 1011 determines that the driver is focusing on the first display, the processing ends.

In step S16, the HMI controller 1011 outputs a predetermined notification made to the driver of the vehicle 1 from the HMI controller 1011 at a display device (hereinafter, referred to as a second display) selected based on a second direction in which the driver of the vehicle is focusing. Here, the display device selected based on the second direction may be a display device closest to a virtual axis representing the second direction. For example, in a case where the HMI controller 1011 determines that the driver is not looking at the first display at which the notification is output, the HMI controller 1011 outputs the notification again at the second display present in a direction in which the driver is focusing.

Note that after the notification is output at the first display and the second display, the HMI controller 1011 may delete the output notification after a predetermined period has elapsed. Further, for example, in a case where a user taps each of the first display or the second display after the notification is output at the first display or the second display, the HMI controller 1011 may delete the notification output at the display device tapped by the user. Alternatively, in a case where a task related to the notification output at the first display or the second display ends, the HMI controller 1011 may delete the notification output at the first display or the second display. For example, in a case where a task related to the notification is an incoming call, the notification output at the first display or the second display may be deleted when the phone call ends.

As described above, in the present embodiment, the HMI controller 1011 included in the vehicle ECU estimates a direction in which the driver is focusing based on the data acquired by the sensor and, in a case where a notification from the vehicle ECU 10 or the body ECU 30 to the driver has occurred, outputs the notification at a display present in the direction in which the driver is focusing.

According to such a configuration, the in-vehicle system according to one aspect of the present disclosure can output a notification at a location where the notification easily comes into sight of the driver.

### (Second Embodiment)

In the first embodiment described above, the HMI controller 1011 estimates the first direction that is a direction in which the driver is focusing based on the first data acquired by the sensor. In the first embodiment, for example, the vehicle interior camera 143 is assumed as the sensor, and the first data that is the image data acquired by the in-vehicle camera is analyzed to estimate the first direction.

In contrast, in the second embodiment, in a case where the HMI controller 1011 detects that the driver is operating a certain display, the notification is simply output at the display without the direction of the line of sight of the driver being detected again.

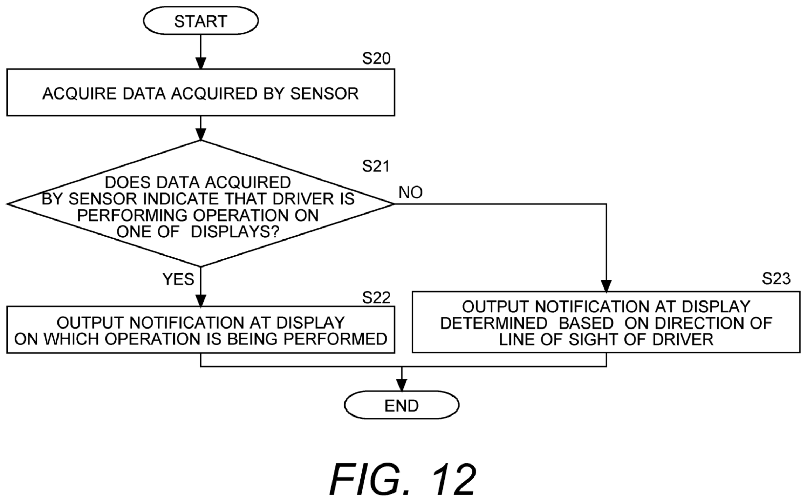

Fig. 12 is a flowchart of processing of outputting a notification at a display device on which operation is being performed based on data for determining the display device on which the driver is performing operation. The processing is periodically executed while the main switch of the vehicle is turned on.

In step S20, the HMI controller 1011 acquires data detected by various kinds of sensors included in the vehicle 1. For example, the HMI controller 1011 may acquire data detected by a touch sensor on a display of the touch panel 25 from a plurality of touch panels 25. It is assumed here that the touch panel is included in a plurality of display devices mounted on the vehicle 1. Note that the sensor data to be acquired by the HMI controller 1011 is not limited to data acquired from the touch panel 25. The HMI controller 1011 may acquire data indicating that the display device is being operated by the driver, or the like, in other kinds of display devices.

In step S21, the HMI controller 1011 determines whether or not the data acquired by the sensor indicates that the driver is performing operation on one of the display devices.

For example, the sensor in step S21 is the touch sensor on the display of the display device (for example, the touch panel 25) for which detection is to be performed. In a case where the HMI controller 1011 determines that the data acquired by the sensor indicates that the driver is operating one of the display devices, the processing transitions to step S22. Note that in the present embodiment, the display device on which the driver is performing operation will be referred to as a third display. In a case where the HMI controller 1011 determines that the data acquired by the sensor indicates that the driver is not operating any display device, the processing transitions to step S23.

In step S22, the HMI controller 1011 determines the display device (third display) on which the driver is performing operation and outputs the notification from the HMI controller 1011 to the driver at the third display.

In other words, in a case where the HMI controller 1011 detects that the driver is operating one of the display devices, the notification is output at the display on which the operation is being performed without the first direction being estimated.

In step S23, the HMI controller 1011 outputs the notification to the driver occurred from the vehicle ECU 10 or the body ECU 30 at the display determined based on the direction of the line of sight of the driver.

Specifically, in a case where the processing transitions to step S23, the HMI controller 1011 executes processing from step S11 to step S16 described in the first embodiment.

With the configuration described above, the in-vehicle system according to one aspect of the present disclosure can reliably output a notification at a display device present in a direction in which the driver is focusing by detecting that the driver is operating the display device.

### (Modification)

In the embodiment, the HMI controller 1011 outputs the notification made from the HMI controller 1011 to the driver of the vehicle 1 at the display device closest to the virtual axis representing the first direction.

However, the HMI controller 1011 does not necessarily have to output the notification only at the display device closest to the virtual axis representing the first direction. The HMI controller 1011 may determine one or a plurality of display devices present within a predetermined range from the virtual axis indicating the first direction as the first display and output the notification at the first display.

Further, for example, in a case where a plurality of display devices is present in a region within a predetermined range from the virtual axis representing the first direction, the HMI controller 1011 may determine a display device with highest priority assigned in advance as the first display among the plurality of display devices and output the notification at the first display. Here, being present within the predetermined range from the virtual axis representing the first direction may mean being present in a range within a predetermined angle from one point on the virtual axis representing the first direction based on the virtual axis. Alternatively, being present within the predetermined range from the virtual axis representing the first direction may mean being present in a range within a predetermined distance from the virtual axis representing the first direction.

Note that the HMI controller 1011 may determine both a display device closest to the virtual axis representing the first direction and a display device with highest priority assigned in advance as the first display and output the predetermined notification at the first display.

Alternatively, the HMI controller 1011 may determine all the plurality of display devices present in the region within the predetermined range from the virtual axis representing the first direction as the first display and output the notification at the first display.

Alternatively, the HMI controller 1011 may determine one display device among the plurality of display devices present in the region within the predetermined range from the virtual axis representing the first direction as the first display, output the notification at the first display and output display indicating that "the notification is output at the one display device" at the other display devices.

Note that in a case where a display device is not present in the region within the predetermined range from the virtual axis representing the first direction, the HMI controller 1011 may determine the display device (first display) at which the notification is to be output in accordance with a type or an occurrence source of the notification.

Further, in the embodiment, the HMI controller 1011 determines again the second direction in which the driver is focusing after outputting the notification made from the HMI controller 1011 to the driver of the vehicle 1 at the first display, and outputs the notification made from the HMI controller 1011 to the driver of the vehicle 1 at the display device closest to the virtual axis representing the second direction.

However, the HMI controller 1011 does not necessarily have to output the notification only at the display device closest to the virtual axis representing the second direction. The HMI controller 1011 may determine one or a plurality of display devices present within a predetermined range from the virtual axis indicating the second direction as the second display and output the notification at the second display.

Further, for example, in a case where a plurality of display devices is present in a region within the predetermined range from the virtual axis representing the second direction, the HMI controller 1011 may determine a display device with highest priority assigned in advance as the second display among the plurality of display devices and output the notification at the second display. Here, being present within the predetermined range from the virtual axis representing the second direction may mean being present in a range within a predetermined angle from one point on the virtual axis representing the second direction based on the virtual axis. Alternatively, being present within the predetermined range from the virtual axis representing the second direction may mean being present in a range within a predetermined distance from the virtual axis representing the second direction.

Note that the HMI controller 1011 may determine both the display device closest to the virtual axis representing the second direction and the display device with highest priority assigned in advance as the second display and output the predetermined notification at the second display.

Alternatively, the HMI controller 1011 may determine all the plurality of display devices present in the region within the predetermined range from the virtual axis representing the second direction as the second display and output the notification at the second display.

Alternatively, the HMI controller 1011 may determine one display device among the plurality of display devices present in the region within the predetermined range from the virtual axis representing the second direction as the second display, output the notification at the second display and output display indicating that "the notification is output at the one display device" at the other display devices.

Note that in a case where a display device is not present in the region within the predetermined range from the virtual axis representing the second direction, the HMI controller 1011 may determine the display device (second display) at which the notification is to be output in accordance with a type or an occurrence source of the notification.

### (Other modifications)

The above-described embodiment is merely an example, and the present disclosure can be changed as appropriate within a range not deviating from the gist of the present disclosure.

For example, the processing and the means described in the present disclosure can be freely combined and implemented unless technical inconsistencies arise.

Further, while in the embodiment, a configuration has been described where the meter display 21, the inner display 22, and the outer display 23 are independent of each other, the respective displays do not necessarily have to be physically independent.

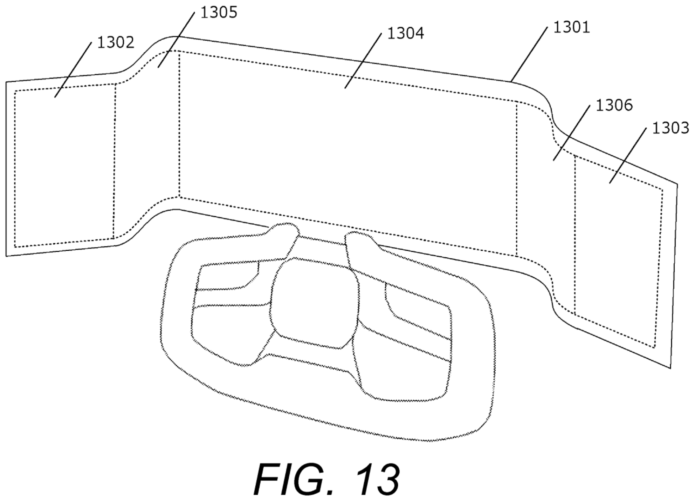

For example, as illustrated in Fig. 13, the meter display 21, the inner display 22, and the outer display 23 may be implemented with one display 1301. In the example in Fig. 13, the display 1301 has three display regions (display portions) indicated with reference numerals 1302, 1303, and 1304. Each of the three display regions is a flat surface and has a structure in which portions between the display regions are curved.

In the illustrated example, the display region 1302 functions as the inner display 22, and the display region 1303 functions as the outer display 23 (in a case of a right-hand-drive vehicle). Further, the display region 1304 functions as the meter display 21.

While a display in a portion (reference numeral 1305) connecting the display regions 1302 and 1304 and a portion (reference numeral 1306) connecting the display regions 1303 and 1304 can be made, the portions are physically curved and distortion occurs, and thus, the portions are not used as display portions in normal aspects.

However, in a case where a line of sight of a driver is in the direction of the display region 1305 or the display region 1306, the HMI controller 1011 may output a notification at the display region 1305 or the display region 1306. Alternatively, in a case where the line of sight of the driver is in the direction of the display region 1305 or the display region 1306, and a notification is output at the display region 1302 or the display region 1303, and the HMI controller 1011 may output an information indicating that a notification has been displayed in other display regions (for example, the display region 1302 or the display region 1303) at the display region 1305 or the display region 1306.

Further, while in the embodiment, three types of data of image data, infrared data and detection data acquired by a touch sensor have been described as first data, the first data may be a combination of the data or may include an information other than them.

Further, while in the embodiment, a first display has been described as a single display, the first display may be a plurality of displays present within the predetermined range from a virtual axis representing the first direction.

Further, the processing described as being performed by one device may be shared and executed by a plurality of devices. Alternatively, the processing described as being performed by different devices may be executed by one device. In a computer system, hardware components (server components) that implement respective functions can be flexibly changed.

The present disclosure can be also implemented by a computer program implementing the functions described in the above embodiments being supplied to a computer, and one or more processors included in the computer reading and executing the program. Such a computer program may be provided to the computer by a non-transitory computer-readable storage medium that can be connected to a system bus of the computer or may be provided to the computer via a network. The non-transitory computer-readable storage medium includes, for example, any type of disc such as a magnetic disc (such as a Floppy (registered trademark) disc and a hard disc drive (HDD)), and an optical disc (such as a CD-ROM, a DVD disc and a Blu-ray disc), and any type of medium appropriate for storing an electronic command such as a read only memory (ROM), a random access memory (RAM), an EPROM, an EEPROM, a magnetic card, a flash memory, and an optical card.

## Claims

1. An in-vehicle system comprising:
a sensor (14);
a plurality of display devices; and
a processor (101) configured to execute:
estimating a first direction that is a direction in which a driver is focusing based on first data that is data acquired by the sensor (14); and
in a case where a predetermined notification to the driver occurs, outputting the predetermined notification at a first display that is a display device selected based on the first direction among the plurality of display devices.

2. The in-vehicle system according to claim 1, wherein the processor (101) is configured to execute outputting the predetermined notification at a display device closest to an axis indicating the first direction.

3. The in-vehicle system according to claim 1, wherein the processor (101) is configured to execute determining a display device present in a region within a predetermined range from an axis indicating the first direction as a first display among the plurality of display devices and outputting the predetermined notification at the first display.

4. The in-vehicle system according to claim 3, wherein the processor (101) is configured to execute, in a case where a plurality of display devices is present in the region within the predetermined range from the axis indicating the first direction, determining a display device with highest priority assigned in advance as the first display and outputting the predetermined notification at the first display.

5. The in-vehicle system according to claim 1, wherein the processor (101) is configured to execute, in a case where a display device is not present in a region within a predetermined range from an axis indicating the first direction, determining the first display based on a type of the notification or an occurrence source of the notification and outputting the predetermined notification at the first display.

6. The in-vehicle system according to claim 1, wherein the processor (101) is configured to execute:
after outputting the predetermined notification at the first display, determining whether or not the driver is focusing on the first display based on second data that is data acquired by the sensor (14), different from the first data;
in a case where it is determined that the driver is not focusing on the first display, estimating a second direction that is a direction in which the driver is focusing, different from the first direction; and
outputting the predetermined notification at a second display that is a display device selected based on the second direction.

7. The in-vehicle system according to claim 1, wherein
the first data includes data for determining a display device on which the driver is performing operation among the plurality of display devices, and
the processor (101) is configured to execute, in a case where it is determined that the driver is performing operation on a third display based on the first data, outputting the predetermined notification at the third display.

8. The in-vehicle system according to claim 1, wherein
the sensor (14) includes an in-vehicle camera (142), and
the first data includes image data captured by the in-vehicle camera (142).

9. The in-vehicle system according to claim 6, wherein
the sensor (14) includes an in-vehicle camera (142), and
the second data includes image data captured by the in-vehicle camera (142).

10. A vehicle with the in-vehicle system according to claim 1.

11. An information processing apparatus that outputs information at a plurality of display devices provided in front of a driver's seat within a vehicle cabin, the information processing apparatus comprising a processor (101) configured to execute:
estimating a first direction that is a direction in which a driver of a vehicle with the plurality of display devices is focusing based on first data that is data acquired by a sensor; and
in a case where a predetermined notification from the vehicle to the driver occurs, outputting the predetermined notification at a first display that is a display device selected based on the first direction among the plurality of display devices.

12. The information processing apparatus according to claim 11, wherein the processor (101) is configured to execute outputting the predetermined notification at a display device closest to an axis indicating the first direction.

13. The information processing apparatus according to claim 11, wherein the processor (101) is configured to execute determining a display device present in a region within a predetermined range from an axis indicating the first direction as a first display among the plurality of display devices and outputting the predetermined notification at the first display.

14. An information processing method to be executed by an in-vehicle system including an information processing apparatus that outputs information via a plurality of display devices, the information processing method comprising:
a step of estimating a first direction that is a direction in which a driver of a vehicle with the in-vehicle system is focusing based on first data that is data acquired by a sensor (14); and
a step of, in a case where a predetermined notification from the in-vehicle system to the driver occurs, outputting the predetermined notification at a first display that is a display device selected based on the first direction among the plurality of display devices.

15. A non-transitory storage medium recording a program for causing a computer to execute the information processing method according to claim 14.
